# EUROPEAN PATENT SPECIFICATION

(11) **EP 3 062 587 B1**
(45) Date of publication and mention of the grant of the patent: **22.08.2018**
(21) Application number: 16154737.7
(22) Date of filing: 08.02.2016
(51) Int. Cl.: H05B 37/02

(54) **CONTROL SYSTEM, AIR CONDITIONING SYSTEM INCLUDING THE SAME, CONTROL METHOD, AND CONTROL PROGRAM**
STEUERUNGSSYSTEM, KLIMAANLAGENSYSTEM DAMIT, STEUERUNGSVERFAHREN UND STEUERUNGSPROGRAMM
SYSTÈME DE COMMANDE, SYSTÈME DE CLIMATISATION LE COMPRENANT, PROCÉDÉ ET PROGRAMME DE COMMANDE

(30) Priority: 25.02.2015 JP 2015035524
(43) Date of publication of application: 31.08.2016
(73) Proprietor: MITSUBISHI HEAVY INDUSTRIES THERMAL SYSTEMS, LTD., Tokyo 108-8215 (JP)
(72) Inventor: Masutani, Akihiro, Tokyo 108-8215 (JP)
(74) Representative: Henkel, Breuer & Partner

(56) References cited:
- EP-A2- 0 813 353
- US-A1- 2006 146 652
- US-A1- 2011 301 776

## Description

### {Technical Field}

The present invention relates to a control system, an air conditioning system including the same, a control method, and a control program.

### {Background Art}

In an indoor unit in an air conditioning system, for example, when respective settings during day and night of the luminance of a display lamp indicating an operating condition or the like are equalized, the display lamp feels too bright at night when the luminance is set somewhat high based on "day" during which the surrounding area is bright and the visibility of the display lamp deteriorates during day when the luminance is set to be kept somewhat low based on "night" during which the surrounding area conversely becomes dark. Therefore, lighting fixtures and home electric appliances are differently set between day and night.

For example, PTL 1, described below, discloses a technique for reducing a display luminance in a period from 10 o'clock at night to 6 o'clock in the morning, during which a microwave oven may be actually unused, to achieve low power consumption using the time on a clock of a microcomputer in the microwave oven.

PTL 2, described below, discloses a ventilation apparatus with a lighting fixture in a bathroom using, when a person wakes from a sleeping state and uses a toilet in a half awake state late at night, low-intensity lighting so that the person does not wake up by suppressing glare and using high-intensity lighting when the person is in an awake state.

PTL 3, described below, discloses a technique for changing a dimming amount of a lighting fixture depending on the predetermined time such as the time when the sun rises and the time when the sun sets, to achieve energy saving.

### {Citation List}

### {Patent Literature}

{PTL 1} Japanese Unexamined Patent Application, Publication No. Sho 63-188192
{PTL 2} Japanese Unexamined Patent Application, Publication No. 2009-39144
{PTL 3} Japanese Unexamined Patent Application, Publication No. 2001-143876

EP 0 813 353 A2 discloses an illumination device.

### {Summary of Invention}

### {Technical Problem}

However, an air conditioning system may be operated when a person sleeps with lighting in a room turned off or may be operated when the person is acting with the lighting in the room turned on so that the surrounding area is bright even during the same nighttime slot. When a setting of the luminance of a display lamp is switched depending on a time slot, the visibility of the display lamp may deteriorate by depending on a situation, like in PTL 1 to PTL 3.

The present invention has been made to solve the aforementioned problem, and is directed to providing a control system for improving the visibility of a display lamp in an indoor unit and an air conditioning system including the same, a control method, and a control program.

### {Solution to Problem}

Accordingly, there is provided a control system as set out in independent claim 1, an air conditioning system as set out in claim 8, a method as set out in independent claim 9, and a control program as set out in independent claim 10. Advantageous developments are defined in the dependent claims.

According to a first aspect of the present invention, a control system includes a display means provided in an indoor unit for emitting light, a human detection sensor for detecting movement of a person in a predetermined region, a calculation means for calculating an amount of activity of the person detected by the human detection sensor within a predetermined period, correspondence information representing a correspondence between a time slot and day and night information serving as identification information for distinguishing between day and night, and a control means for acquiring current time information and controlling the luminance of the display means based on the day and night information corresponding to the current time read out of the correspondence information and the amount of activity.

According to the first aspect of the present invention, the indoor unit includes the display means for emitting light, and the amount of activity of the person detected by the human detection sensor is calculated in the predetermined period in the predetermined region. The day and night information corresponding to the current time is read out based on the correspondence information representing the correspondence between the time slot and the identification information for distinguishing between day and night. The luminance of the display means is controlled based on the day and night information and the amount of activity.

The luminance of the display means is thus controlled by combining the amount of activity and the day and night information (the time slot). Therefore, the luminance of the display means can be more finely controlled than when the luminance is controlled only by the time slot, leading to an improvement in the visibility. The amount of activity is calculated using the human detection sensor conventionally used for an air conditioning operation or the like. Therefore, a new device or sensor need not be added. Accordingly, costs can be controlled.

When a user of the air conditioning system can identify that the human detection sensor is reacting and the sensitivity of the human detection sensor even if a display unit for informing the user of the sensitivity of the human detection sensor is not provided by confirming (visually observing) a change in the luminance of the display means.

In the aforementioned first aspect, the control system may include a determination means for determining whether the amount of activity is more than an activity amount threshold value, in which the control means may acquire the current time information, and set the luminance of the display means to more than a luminance threshold value when it is now night based on the day and night information corresponding to the current time read out of the correspondence information and the determination means determines that the amount of activity is more than the activity amount threshold value.

If it is now night and the amount of activity is more than the activity amount threshold value, a case where the person is awake and acting even at night is considered. In such a case, it is presumed that a space where the indoor unit is provided is bright as lighting is turned on. Therefore, the luminance of the display means is set to more than the luminance threshold value.

The visibility can be improved by preventing deterioration thereof caused when the luminance is determined by the time slot and is changed because it is night.

In the aforementioned first aspect, the control system may include a determination means for determining whether the amount of activity is not more than the activity amount threshold value, in which the control means may acquire the current time information, and set the luminance of the display means to not more than the luminance threshold value when it is now night based on the day and night information corresponding to the current time read out of the correspondence information and the determination means determines that the amount of activity is not more than the activity amount threshold value.

Thus, if it is now night and the amount of activity is not more than the activity amount threshold value, it is presumed that the person is absent or is small in the amount of activity (e.g., is sleeping). Therefore, the luminance of the display means is reduced to not more than the luminance threshold value. This can prevent, even if the person sleeps while lighting in a space where the indoor unit is provided is turned off and the air conditioning system is being operated, the person's sleep from being disturbed due to excessive brightness because the luminance of the display means is high, although the surrounding area is dark.

In the control system in the aforementioned first aspect, the luminance of the display means may be set depending on the color of emitted light.

When a light emitting diode (LED) is used for the display means, the luminance of a blue LED is felt higher than those of a white LED and a read LED even if the same current is caused to flow therethrough. Users differently feel the brightness.

When the luminance is set depending on the color of emitted light (e.g., the luminance of the blue LED is adjusted to be kept lower than those of the LEDs in the other colors), therefore, the respective luminances of the display means when the same current is caused to flow therethrough can be equalized.

In the aforementioned first aspect, the control system may include a calendar means in which the time when the sun rises and the time when the sun sets are set to correspond to the date, in which the time slot in the correspondence information may be made different depending on the date based on the calendar means.

The time when the sun rises and the time when the sun sets differ depending on the season. When the time slot for identifying day and night is made different depending on the time (date), the visibility of the display means can be more improved.

In the control system in the aforementioned first aspect, the correspondence information sets day and night in a plurality of stages, and the control means may gradually set the luminance of the display means based on day and night information about day and night in the plurality of stages and the amount of activity.

When the respective luminances during day and night are set to not only "day" and "night" in two stages but also "day 1", "day 2", "night 1", and "night 2" in a plurality of stages depending on time slots, the visibility of the display means can be more improved depending on each of the time slots.

In the aforementioned first aspect, the control system may include a timer means provided in the indoor unit, and a clock means provided in a remote controller for remotely operating the indoor unit for outputting time information, in which the timer means may count down a difference between the time when daytime and nighttime slots in the correspondence information are switched and the time information acquired from the remote controller, and the control means may change the luminance of the display means when it detects that the timer means has reached zero.

Even if the clock function (clock means) is not provided in the indoor unit, therefore, when the timer means is provided, daytime and nighttime slots can be reliably detected, and the luminance of the display means can be changed depending on each of the time slots.

In a second aspect of the present invention, an air conditioning system includes the control system according to the aforementioned first aspect, an indoor unit including a display means capable of emitting light, and an outdoor unit corresponding to the indoor unit.

According to a third aspect of the present invention, a method for controlling an air conditioning system is a control method including a first step of detecting movement of a person in a predetermined region, a second step of calculating an amount of activity of the person detected in the first step within a predetermined period, and a third step of acquiring the current time and controlling the luminance of a display means that emits light based on day and night information corresponding to the current time read out of correspondence information representing a correspondence between a time slot and identification information for distinguishing between day and night and the amount of activity.

According to a fourth aspect of the present invention, a control program for an air conditioning system is a control program for causing a computer to execute a first process for detecting movement of a person in a predetermined region, a second process for calculating an amount of activity of the person detected in the first process within a predetermined period, and a third process for acquiring the current time and controlling the luminance of a display means that emits light based on day and night information corresponding to the current time read out of correspondence information representing a correspondence between a time slot and identification information for distinguishing between day and night and the amount of activity.

### {Advantageous Effects of Invention}

The present invention produces an effect of improving the visibility of a display lamp in an indoor unit.

### {Brief Description of Drawings}

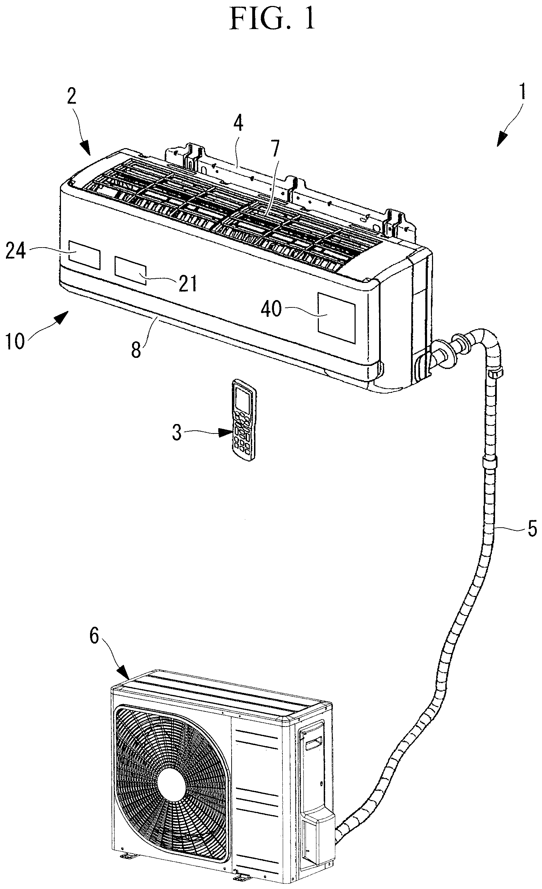

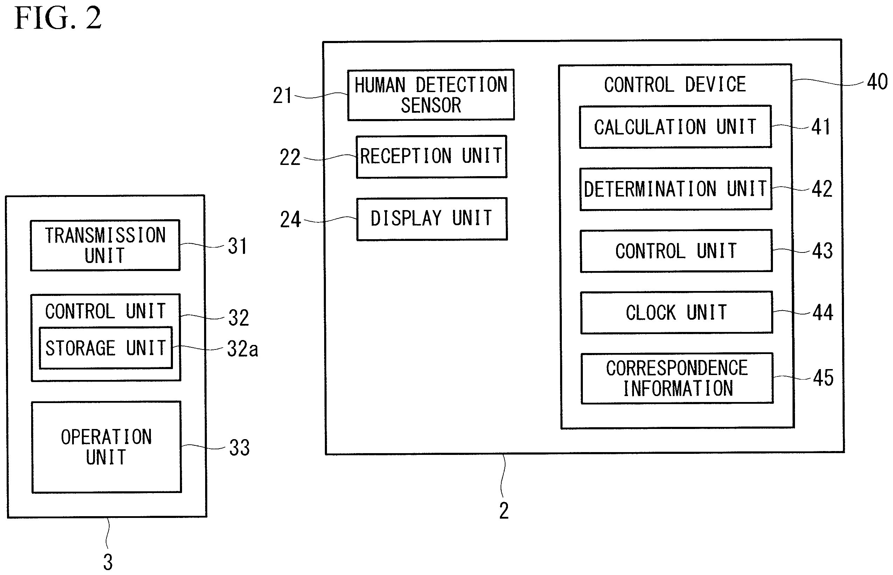

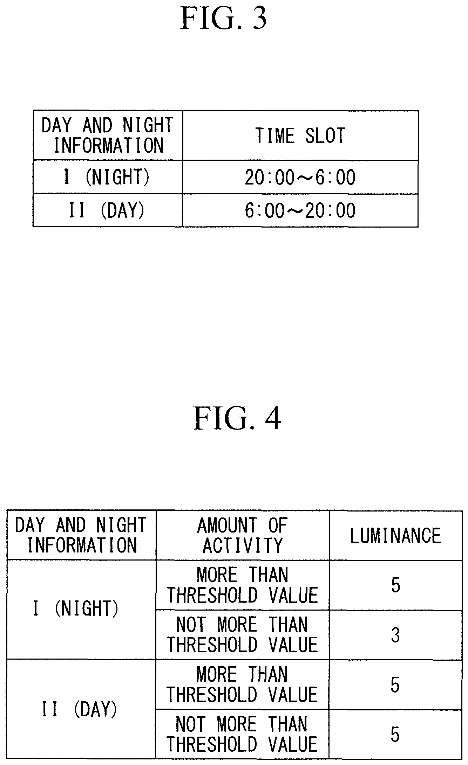

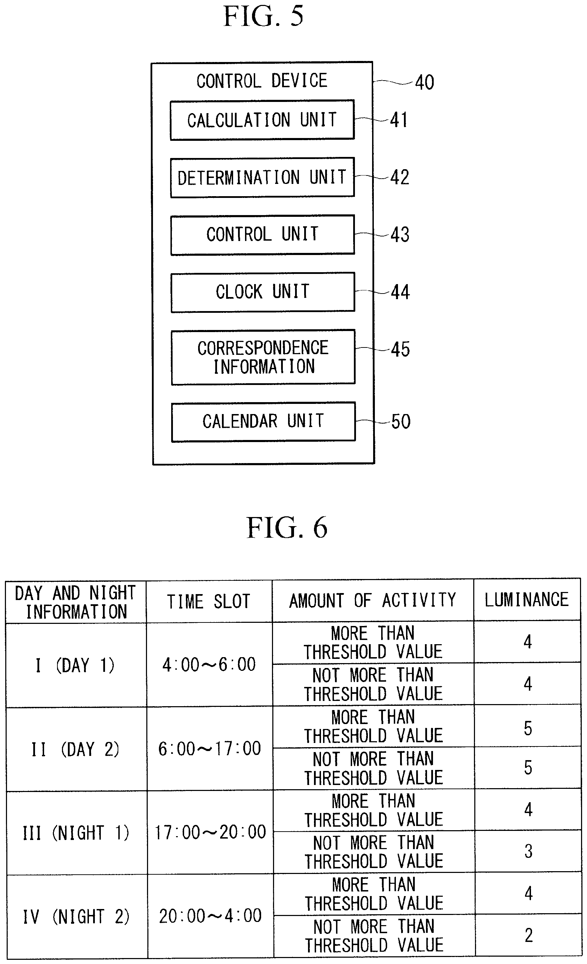

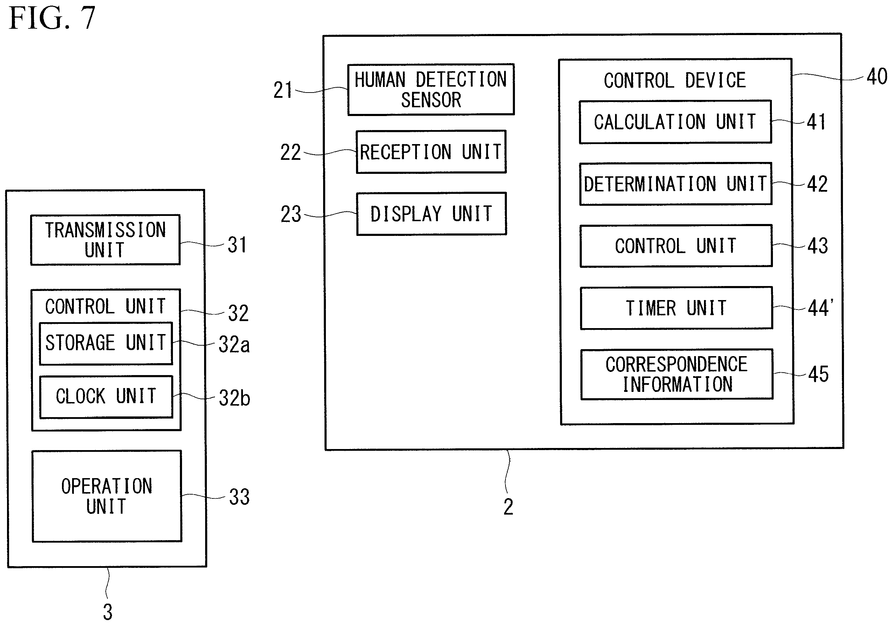

{Fig. 1} Fig. 1 is a perspective view illustrating an appearance of an air conditioning system according to a first embodiment of the present invention.
{Fig. 2} Fig. 2 is a functional block diagram of an indoor unit and a remote controller in the air conditioning system according to the first embodiment of the present invention.
{Fig. 3} Fig. 3 illustrates an example of correspondence information according to the first embodiment of the present invention.
{Fig. 4} Fig. 4 illustrates an example of luminance correspondence information according to the first embodiment of the present invention.
{Fig. 5} Fig. 5 is a functional block diagram of a control device according to modified example 2 of the first embodiment of the present invention.
{Fig. 6} Fig. 6 illustrates an example of a combination of correspondence information and luminance correspondence information according to modified example 3 of the first embodiment of the present invention.
{Fig. 7} Fig. 7 is a functional block diagram of an indoor unit and a remote controller in an air conditioning system according to a second embodiment of the present invention.

### {Description of Embodiments}

### [First Embodiment]

A first embodiment of the present invention will be described below with reference to Figs. 1 to 6.

Respective examples of a control system according to the present invention and an air conditioning system including the same, a control method, and a control program will be described below with reference to the drawings.

Fig. 1 is an external perspective view of an air conditioning system according to an embodiment of the present invention.

The air conditioning system 1 is a separate-type air conditioning unit, and includes an outdoor unit 6, an indoor unit (indoor unit) 2, a remote controller 3, and a control system 10. The outdoor unit 6 is installed in place outdoors, and the indoor unit 2 is installed on an indoor wall surface via an installation plate 4. The outdoor unit 6 and the indoor unit 2 are integrated by being connected via inside-outside connection piping 5 and a signal line (not illustrated), and are operated by the remote controller 3.

The outdoor unit 6 has outdoor equipment such as a compressor, an outdoor heat exchanger, an outdoor air blower, a four-direction switching valve, an expansion valve, and an outdoor controller accommodated and installed therein, as known, while the indoor unit 2 has indoor equipment such as an indoor heat exchanger, an indoor air blower, and an indoor controller accommodated and installed therein. The compressor, the outdoor heat exchanger, the four-direction switching valve, the expansion valve, and the indoor heat exchanger are sequentially connected via refrigerant piping including the inside-outside connection piping 5, to constitute a known refrigeration cycle serving as a closed cycle. The refrigeration cycle is filled with a required amount of refrigerant.

The indoor unit 2 sucks indoor air from a suction grill 7 provided on its upper surface (and/or its front surface), cools or heats the air using an indoor heat exchanger (not illustrated) to adjust temperature, and then blows out the air into the room from a lower outlet port 8 via the air blower, to serve to indoor air conditioning. The indoor unit 2 includes a display unit (display means) 24. An operating condition of the indoor unit 2, for example, is displayed on the display unit 24, and is presented to a user.

The control system 10 includes a human detection sensor 21, a display unit 24, and a control device 40. In the present embodiment, the control system 10 is provided in the indoor unit 2.

Fig. 2 is a functional block diagram of the indoor unit 2 and the remote controller 3.

The indoor unit 2 includes a human detection sensor 21, a reception unit 22, a display unit 24, and the control device 40.

The human detection sensor 21 is provided on a front surface of the indoor unit 2, to detect movement of a person in a predetermined region and output a detection result to the control device 40. The human detection sensor 21 includes a detection device such as an infrared sensor or an ultrasonic sensor or an image sensor, for example, and detects a person existing in a predetermined region of a room in which the indoor unit 2 is provided.

The reception unit 22 receives various types of signals (e.g., an air conditioning operation start signal) from the remote controller 3, and outputs received information to the control device 40.

The display unit 24 is provided on a front surface of the indoor unit 2, to emit light. An example of the display unit 24 is a display lamp or a display. While the display unit 24 emits light using an LED in the present embodiment, a means for causing the display unit 24 to emit light is not particularly limited. The luminance of the display unit 24 can be gradually set. For example, the luminance of the display unit 24 is set in five stages, and can be set so that the stage in which the luminance is the highest is "stage 5", the stage in which the luminance is kept lower than that in "stage 5" is "stage 4, and the stage in which the luminance is kept lower than that in "stage 4" is "stage 3", and so on.

The control device 40 is a computer, for example, and includes a central processing unit (CPU), a random access memory (RAM), and a computer readable recording medium, which are not illustrated. A processing procedure for implementing various types of functions, described below, is recorded on the recording medium in the form of a program. When the CPU reads out the program into the RAM or the like, and executes information processing and calculation, the various types of functions, described below, are implemented.

More specifically, the control device 40 includes a calculation unit (calculation means) 41, a determination unit (determination means) 42, a control unit (control means) 43, a clock unit 44, and correspondence information 45.

The calculation unit 41 calculates an amount of activity of the person detected by the human detection sensor 21 within a predetermined period. For example, the calculation unit 41 counts the number of detection signals indicating that the human detection sensor 21 has detected the movement of the person in a predetermined period (e.g., five minutes), and sets a counting result as the amount of activity.

The determination unit 42 determines whether the amount of activity within the predetermined period is more than an activity amount threshold value. For example, when the amount of activity of the person is determined by the number of times of the detection of the movement of the person by the human detection sensor 21, the activity amount threshold value is provided for the number of times of the detection, and the determination unit 42 determines whether the number of times of the detection by the human detection sensor 21 is more than the activity amount threshold value. The determination unit 42 can determine that the person is moving and acting if the amount of activity is more than the activity amount threshold value, and can determine that the person is absent or is small in the amount of activity (e.g., is sleeping) if the amount of activity is not more than the activity amount threshold value.

The correspondence information 45 represents a correspondence between a time slot and day and night information serving as identification information for distinguishing between day and night, and is stored in a storage unit (not illustrated) provided in the control device 40. Fig. 3 illustrates an example of the correspondence information 45. While a period from 20 o'clock to 6 o'clock is set to "I (night)" and a period from 6 o'clock to 20 o'clock is set to "II (day)" in Fig. 3, the setting of day and night is not limited to this. Day and night need not match actual day and night. For example, a period from 6 o'clock to 20 o'clock may be set to "night" and a period from 20 o'clock to 6 o'clock may be set to "day". Day and night in the present embodiment are day and night set for the air conditioning system 1. In other words, the day and night information represented by the correspondence information 45 is identification information for determining the luminance of the display unit 24.

The clock unit 44 has a clock function, and outputs current time information to the control unit 43. The clock unit 44 also has a timer function for measuring a predetermined period such as an amount of activity of the person by the human detection sensor 21.

The control unit 43 acquires the current time information, to control the luminance of the display unit 24 based on the day and night information corresponding to the current time read out of the correspondence information 45 and the amount of activity. More specifically, the control unit 43 sets the luminance of the display unit 24 to more than a luminance threshold value when it is now night based on the acquired current time information and the day and night information in the time slot including the time information in the correspondence information 45 and the determination unit 42 determines that the amount of activity is more than the activity amount threshold value.

This considers a case where the person is awake and acting even at night. In such a case, it is assumed that a space (room) in which the indoor unit 2 is provided is bright as lighting is turned on and the user confirms a display content displayed on the display unit 24. Therefore, the luminance of the display unit 24 is set to more than a predetermined value. Accordingly, the visibility of the display unit 24 can be improved even while the room is bright by the lighting.

The control unit 43 acquires the current time information, and sets the luminance of the display unit 24 to not more than the luminance threshold value when it is now night based on the day and night information corresponding to the current time read out of the correspondence information 45 and the determination unit 42 determines that the amount of activity is not more than the activity amount threshold value.

This considers a case where the person is sleeping while the lighting in the space where the indoor unit 2 is provided is turned off and the air conditioning system 1 is being operated or the person is absent in the space. In such a case, it is assumed that the user hardly confirms (or does not confirm) a display content of the display unit 24. Thus, the luminance of the display unit 24 is suppressed to not more than the luminance threshold value. This prevents the person's sleep from being disturbed because the luminance of the display unit 24 is high, although the space is darkened.

The control unit 43 acquires the current time information, and sets the luminance of the display unit 24 to more than the luminance threshold value without depending on the amount of activity when the day and night information corresponding to the time slot including the current time is day based on the correspondence information 45.

For example, a luminance threshold value (e.g., "stage 3" among the luminances in the five stages) is previously provided. The control unit 43 performs control to set the luminance of the display unit 24 to "stage 5" if the luminance is more than the luminance threshold value and set the luminance of the display unit 24 to "stage 3" if the luminance is not more than the luminance threshold value.

As illustrated in Fig.4, the control unit 43 may control the luminance of the display unit 24 by storing luminance correspondence information having a correspondence with luminance information corresponding to a combination of day and night information and the presence or absence of excess of an activity amount threshold value in the storage unit and reading out the luminance correspondence information.

The remote controller 3 includes a transmission unit 31, a control unit 32, and an operation unit 33.

The operation unit 33 is operated by the user of the air conditioning system 1. When the user operates a button provided in the operation unit 33 is operated, various types of control signals (e.g., an air conditioning operation start signal, and a luminance setting signal of the display unit 24) are input.

The control unit 32 is a computer, for example, and includes a CPU, a RAM, and a computer readable recording medium, which are not illustrated. A processing procedure for implementing various types of functions, described below, is recorded on the recording medium in the form of a program. When the CPU reads out the program into the RAM or the like, and executes information processing and calculation, the various types of functions, described below, are implemented.

The control unit 32 includes a storage unit 32a.

The storage unit 32a stores an operation content of the operation unit 33 and a setting content.

The transmission unit 31 outputs various types of control signals input from the operation unit 33 to the indoor unit 2. For example, the transmission unit 31 outputs an air conditioning operation start signal for starting an operation of the indoor unit 2.

The configuration described above produces the following function and effect according to the present embodiment.

When the user operates the remote controller 3 to start an air conditioning operation, an air conditioning operation control signal is transmitted from the transmission unit 31 in the remote controller 3 to the indoor unit 2.

When the air conditioning operation control signal is received in the reception unit 22 in the indoor unit 2, the air conditioning operation control signal is output to the control device 40. The indoor unit 2 starts to operate based on the air conditioning operation control signal.

When the indoor unit 2 starts to operate, the movement of the person in the predetermined region is detected by the human detection sensor 21 in the space where the indoor unit 2 is arranged while the amount of activity of the person within the predetermined period detected by the human detection sensor 21 is calculated. The calculated amount of activity is compared with the activity amount threshold value. It is determined whether it is now "day" or "night" based on the time information acquired from the clock unit 44 and the correspondence information 45.

If it is now "night" and the amount of activity is more than the activity amount threshold value, it is assumed that the person is acting, and the luminance of the display unit 24 is set to a value (e.g., stage 5) that is more than the luminance threshold value (e.g., stage 3). If it is now "night" and the amount of activity is not more than the activity amount threshold value, it is assumed that the person is absent or is sleeping, and the luminance of the display unit 24 is set to a value (e.g., stage 3) that is not more than the luminance threshold value. If it is now "day", the luminance of the display unit 24 is set to a value (e.g., stage 5) that is more than the luminance threshold value without depending on the amount of activity.

As described above, in the control system 10 according to the present embodiment and the air conditioning system 1 including the same, the control method, and the control program, the indoor unit 2 includes the display unit 24 that emits light, the amount of activity of the person in the predetermined region within the predetermined period detected by the human detection sensor 21 is calculated, the day and night information corresponding to the current time is read out based on the correspondence information 45 representing a correspondence between the time slot and the day and night information, and the luminance of the display unit 24 is controlled based on the day and night information and the amount of activity.

If it is now night and the amount of activity is not more than the activity amount threshold value, it is presumed that the person is absent or is small in the amount of activity (e.g., is sleeping). Therefore, the luminance of the display unit 24 is reduced to not more than the luminance threshold value. This can prevent, even if the person sleeps while lighting in a space where the indoor unit 2 is provided is turned off and the air conditioning system 1 is being operated, the sleep from being disturbed because the luminance of the display unit 24 is high.

If it is now night and the amount of activity is more than the activity amount threshold value, the person may be awake and acting even at night. In such a case, the space where the indoor unit 2 is provided is presumed to be bright as the lighting is turned on. Thus, the luminance of the display unit 24 is set to more than the luminance threshold value. Accordingly, the visibility of the display unit 24 can be improved even while the space is bright by the lighting.

The user of the air conditioning system 1 can identify that the human detection sensor 21 is reacting and the sensitivity of the human detection sensor 21, by confirming a change in the luminance, even if a display region for separately informing the display unit 24 of the sensitivity is not provided.

### [Modified Example 1]

In addition to the aforementioned embodiment, the luminance of the display unit 24 may be set depending on the color of emitted light. More specifically, when an LED is used as the display unit 24, the luminance of a blue LED is felt higher than those of LEDs in other colors such as a white LED and a red LED if the same current is caused to flow through the LEDs. Users feel brightness differently. Therefore, the respective luminances of the display unit 24 when the same current is caused to flow therethrough can be equalized by setting the luminance, as needed, depending on the color of emitted light.

When control to set the luminance to five stages, i.e., "stage 1" to "stage 5", set a luminance threshold value to "stage 3", and set the luminance of the display unit 24 to more than the luminance threshold value is performed, the luminance of the blue LED can be set to "stage 4" in which the luminance is kept lower than "stage 5" in which the luminance is the highest, and the luminance of the LED in the other color can be set to "stage 5" in which the luminance is the highest.

The luminance may be thus set by directly operating the indoor unit 2, or may be set from the remote controller 3 and transmitted to the indoor unit 2.

Thus, the luminances are equalized by setting the luminance depending on the color of emitted light, leading to an improvement in visibility.

### [Modified Example 2]

As illustrated in Fig. 5, the control device 40 includes a calendar unit (calendar means) 50 in which the time when the sun rises and the time when the sun sets are set depending on the date, and a time slot in the correspondence information 45 may be made different depending on the date based on the calendar unit 50.

The visibility of the display unit 24 can be improved by considering that the time when the sun rises and the time when the sun sets differ depending on the season and the time and making the time slot for identifying day and night different depending on the time (date).

### [Modified Example 3]

The correspondence information 45 may have a plurality of daytime and nighttime slots set therein, and the control unit 43 may gradually set the luminances of the display unit 24 to respectively correspond to the plurality of time slots.

Fig. 6 illustrates an example of a combination of correspondence information and luminance correspondence information according to the modified example.

For example, the respective luminances during day and night are set to a plurality of stages, i.e., not only "day" and "night" but also I (day 1), II (day 2), III (night 1), and IV (night 2) depending on the time slots. The luminance of the display unit 24 is set based on day and night information, i.e., I (day 1), II (day 2), III (night 1), and IV (night 2) and an amount of activity.

Thus, the user can more easily identify the display unit 24 depending on each of the time slots.

### [Second Embodiment]

A second embodiment of the present invention will be described below with reference to Fig. 7. The present embodiment differs from the first embodiment in that an indoor unit 2 does not have a clock function but includes a timer unit 44' having a timer function, a remote controller 3 has a clock function, and a combination of the indoor unit 2 and the remote controller 3 causes the indoor unit 2 to identify the time. For the present embodiment, description of points common to those in the first embodiment are not repeated, and points different from those in the first embodiment will be mainly described.

The remote controller 3 includes a clock unit (clock means) 32b. The clock unit 32b outputs time information, together with an air conditioning operation control signal, to the indoor unit 2 when the remote controller 3 is operated, and the air conditioning operation control signal is input thereto and is transmitted to the indoor unit 2.

The indoor unit 2 includes the timer unit (timer means) 44'.

The indoor unit 2 outputs, when it acquires the time information from a reception unit 22, the time information to the timer unit 44'.

The timer unit 44' measures (counts) a predetermined period of time when it acquires the air conditioning operation control signal. More specifically, the timer unit 44' measures a predetermined period of time during which a human detection sensor 21 measures an amount of activity of a person.

The timer unit 44' counts down hours corresponding to a difference between the time in a boundary when a daytime slot and a nighttime slot are switched in correspondence information 45 and the time information acquired from the remote controller 3 (i.e., an interval from the current time to the time when day and night are switched).

A control unit 43 changes the luminance of the display unit 24 when it detects that the count by the timer unit 44' has reached zero.

By the aforementioned configuration, the following function and effect are produced according the present embodiment.

When the user operates the remote controller 3, to start an air conditioning operation, the time information (e.g., 17 o'clock) in the clock unit 32b, together with the air conditioning operation control signal, is transmitted from a transmission unit 31 in the remote controller 3 to the indoor unit 2.

The air conditioning operation control signal and the time information are output to a control device 40 when received by the reception unit 22 in the indoor unit 2. The indoor unit 2 starts to operate based on the air conditioning operation control signal.

The timer unit 44' calculates hours (e.g., three hours) corresponding to a difference between the time information (e.g., 17 o'clock) acquired from the remote controller 3 and the time when daytime and nighttime slots are switched (e.g., 20 o'clock based on Fig. 3) in the correspondence information 45, and counts down the hours (e.g., three hours) corresponding to the difference.

When it is detected that the count by the timer unit 44' has reached zero (i.e., three hours have elapsed), the control unit 43 is notified that the count by the timer unit 44' has reached zero.

The control unit 43, which has received the notification that the count by the timer unit 44' has reached zero, adjusts the luminance of the display unit 24.

Even if the indoor unit 2 does not have the clock function, therefore, if the indoor unit 2 includes the timer unit 44', and acquires the clock information from the remote controller 3, the daytime and nighttime slots can be reliably detected, and the luminance of the display unit 24 can be changed depending on each of the time slots.

### {Reference Signs List}

- 1: Air conditioning system
- 2: Indoor unit
- 3: Remote controller
- 6: Outdoor unit
- 21: Human detection sensor
- 24: Display unit (display means)
- 32b: Clock unit (clock means)
- 40: Control device
- 41: Calculation unit (calculation means)
- 42: Determination unit (determination means)
- 43: Control unit (control means)
- 44: Clock unit
- 44': Timer unit (timer means)
- 45: Correspondence information

## Claims

1. A control system (10) of an air conditioning system (1), the control system (10) comprising:
a display means (24) for being provided in an indoor unit (2) of the air conditioning system (1) for emitting light;
a human detection sensor (21) for detecting movement of a person in a predetermined region;
a calculation means (41) adapted to calculate an amount of activity of the person detected by the human detection sensor (21) within a predetermined period;
a storage means adapted to store correspondence information (45) representing a correspondence between a time slot and day and night information serving as identification information for distinguishing between day and night; and
a control means (43) adapted to acquire current time information, to control the luminance of the display means (24) based on the day and night information corresponding to the current time read out of the correspondence information (45) and the amount of activity.

2. The control system (10) according to claim 1, further comprising
a determination means (42) adapted to determine whether the amount of activity is more or not more than an activity amount threshold value,
wherein the control means (43) is adapted to acquire the current time information, and set the luminance of the display means (24) to more than a luminance threshold value when it is night based on the day and night information corresponding to the current time read out of the correspondence information (45) and the determination means (42) determines that the amount of activity is more than the activity amount threshold value, and/or
wherein the control means (43) is adapted to acquire the current time information, and set the luminance of the display means (24) to not more than the luminance threshold value when it is night based on the day and night information corresponding to the current time read out of the correspondence information (45) and the determination means (42) determines that the amount of activity is not more than the activity amount threshold value.

3. The control system (10) according to any one of claims 1 and 2, wherein the luminance of the display means (24) is set depending on the color of emitted light.

4. The control system (10) according to any one of claims 1 to 3, further comprising
a calendar means (50) in which the time when the sun rises and the time when the sun sets are set to correspond to the date,
wherein the time slot in the correspondence information (45) is made different depending on the date based on the calendar means (50).

5. The control system (10) according to any one of claims 1 to 4, wherein
the correspondence information (45) sets day and night in a plurality of stages,
the control means (43) gradually sets the luminance of the display means (24) based on the day and night information about day and night in the plurality of stages and the amount of activity.

6. The control system (10) according to any one of claims 1 to 5, further comprising
a timer means (44') for being provided in the indoor unit (2), and
a remote controller (3), including a clock means (32b) for outputting time information, for remotely operating the indoor unit (2),
wherein the timer means (44') is adapted to count down a difference between the time when daytime and nighttime slots are switched in the correspondence information (45) and the time information acquired from the remote controller (3), and
the control means (43) is adapted to change the luminance of the display means (23) when it detects that the timer means (44') has reached zero.

7. An air conditioning system (1) comprising:
the control system (10) according to any one of claims 1 to 6,
an indoor unit (2) including the display means (24) capable of emitting light, and
an outdoor unit (6) corresponding to the indoor unit (2) .

8. A method for controlling a display means (24) of an air conditioning system (1), the control method comprising:
a first step of detecting movement of a person in a predetermined region;
a second step of calculating an amount of activity of the person detected in the first step within a predetermined period;
a third step of reading correspondence information (45) representing a correspondence between a time slot and identification information for distinguishing between day and night; and
a fourth step of acquiring the current time, to control the luminance of the display means (24) that emits light based on the day and night information corresponding to the current time read out of the correspondence information (45) and the amount of activity.

9. A control program for a display means (24) of an air conditioning system (1), which when run on a computer, causes the computer to execute:
a first process for detecting movement of a person in a predetermined region;
a second process for calculating an amount of activity of the person detected in the first process within a predetermined period;
a third process for reading correspondence information (45) representing a correspondence between a time slot and identification information for distinguishing between day and night; and
a fourth process for acquiring the current time, to control the luminance of the display means (24) that emits light based on the day and night information corresponding to the current time read out of the correspondence information (45) and the amount of activity.

## Patentansprüche

1. Steuerungssystem (10) eines Klimaanlagensystems (1), wobei das Steuerungssystem (10) aufweist:
eine Anzeigeeinrichtung (24), um in einer Innenraumeinheit (2) des Klimaanlagensystems (1) zum Emittieren von Licht vorgesehen zu sein;
einen Personenerfassungssensor (21) zum Erfassen einer Bewegung einer Person in einem vorbestimmten Gebiet;
eine Berechnungseinrichtung (41), die angepasst ist, um eine Aktivitätsgröße der durch den Personenerfassungssensor (21) erfassten Person innerhalb einer vorbestimmten Zeitdauer zu berechnen;
eine Speichereinrichtung, die angepasst ist, um Korrespondenzinformationen (45) zu speichern, die eine Korrespondenz zwischen einem Zeitschlitz und Tages- und Nachtinformationen, die als Identifikationsinformationen zum Unterscheiden zwischen Tag und Nacht dienen, darstellen; und
eine Steuerungseinrichtung (43), die angepasst ist, um gegenwärtige Zeitinformationen zu akquirieren, um die Leuchtdichte der Anzeigeeinrichtung (24) basierend auf den Tages- und Nachtinformationen korrespondierend zu der aus den Korrespondenzinformationen (45) gelesenen gegenwärtigen Zeit und der Aktivitätsgröße zu steuern.

2. Steuerungssystem (10) nach Anspruch 1, ferner aufweisend:
eine Bestimmungseinrichtung (42), die angepasst ist, um zu bestimmen, ob die Aktivitätsgröße größer oder nicht größer als ein Aktivitätsgrößenschwellenwert ist,
wobei die Steuerungseinrichtung (43) angepasst ist, um die gegenwärtigen Zeitinformationen zu akquirieren, und die Leuchtdichte der Anzeigeeinrichtung (24) größer als einen Leuchtdichteschwellenwert einzustellen, wenn es Nacht ist, basierend auf den Tages- und Nachtinformationen korrespondierend zu der aus den Korrespondenzinformationen (45) gelesenen gegenwärtigen Zeit, und die Bestimmungseinrichtung (42) bestimmt, dass die Aktivitätsgröße größer als der Aktivitätsgrößenschwellenwert ist, und/oder
wobei die Steuerungseinrichtung (43) angepasst ist, um die gegenwärtigen Zeitinformationen zu akquirieren, und die Leuchtdichte der Anzeigeeinrichtung (24) auf nicht größer als den Leuchtdichteschwellenwert einzustellen, wenn es Nacht ist, basierend auf den Tages- und Nachtinformationen korrespondierend zu der aus den Korrespondenzinformationen (45) gelesenen gegenwärtigen Zeit, und die Bestimmungseinrichtung (42) bestimmt, dass die Aktivitätsgröße nicht größer als der Aktivitätsgrößenschwellenwert ist.

3. Steuerungssystem (10) nach einem der Ansprüche 1 und 2, wobei die Leuchtdichte der Anzeigeeinrichtung (24) in Abhängigkeit von der Farbe von emittiertem Licht eingestellt ist.

4. Steuerungssystem (10) nach einem der Ansprüche 1 bis 3, ferner aufweisend:
eine Kalendereinrichtung (50), in welcher die Zeit, zu der die Sonne aufgeht, und die Zeit, zu der die Sonne untergeht, eingestellt sind, um zu dem Datum zu korrespondieren,
wobei der Zeitschlitz in den Korrespondenzinformationen (45) in Abhängigkeit von dem Datum basierend auf der Kalendereinrichtung (50) verschieden ist.

5. Steuerungssystem (10) nach einem der Ansprüche 1 bis 4, wobei
die Korrespondenzinformationen (45) Tag und Nacht in einer Vielzahl von Stufen einstellen, und
die Steuerungseinrichtung (43) die Leuchtdichte der Anzeigeeinrichtung (24) basierend auf den Tages- und Nachtinformationen über Tag und Nacht in der Vielzahl von Stufen und der Aktivitätsgröße schrittweise einstellt.

6. Steuerungssystem (10) nach einem der Ansprüche 1 bis 5, ferner aufweisend:
eine Zeitgebereinrichtung (44'), die in der Innenraumeinheit (2) vorgesehen ist, und
eine Fernsteuerung (3) einschließlich einer Takteinrichtung (32b) zum Ausgeben von Zeitinformationen, um die Innenraumeinheit (2) fernzusteuern,
wobei die Zeitgebereinrichtung (44') angepasst ist, um eine Differenz zwischen der Zeit, wenn Tageszeit- und Nachtzeitschlitze in den Korrespondenzinformationen (45) umgeschaltet sind, und den von der Fernsteuerung (3) akquirierten Zeitinformationen herunterzuzählen, und
die Steuerungseinrichtung (43) angepasst ist, um die Leuchtdichte der Anzeigeeinrichtung (23) zu ändern, wenn sie erfasst, dass die Zeitgebereinrichtung (44') Null erreicht hat.

7. Klimaanlagensystem (1), aufweisend:
das Steuerungssystem (10) nach einem der Ansprüche 1 bis 6,
eine Innenraumeinheit (2) einschließlich der Anzeigeeinrichtung (24), die Licht emittieren kann, und
eine Außeneinheit (6) korrespondierend zu der Innenraumeinheit (2).

8. Verfahren zum Steuern einer Anzeigeeinrichtung (24) eines Klimaanlagensystems (1), wobei das Steuerungsverfahren aufweist:
einen ersten Schritt zum Erfassen einer Bewegung einer Person in einem vorbestimmten Gebiet;
einen zweiten Schritt zum Berechnen einer Aktivitätsgröße der in dem ersten Schritt erfassten Person innerhalb einer vorbestimmten Zeitdauer;
einen dritten Schritt zum Lesen von Korrespondenzinformationen (45), die eine Korrespondenz zwischen einem Zeitschlitz und Identifikationsinformationen zum Unterscheiden zwischen Tag und Nacht darstellen; und
einen vierten Schritt zum Akquirieren der gegenwärtigen Zeit, um die Leuchtdichte der Anzeigeeinrichtung (24), die Licht basierend auf den Tages- und Nachtinformationen emittiert, korrespondierend zu der aus den Korrespondenzinformationen (45) gelesenen gegenwärtigen Zeit und der Aktivitätsgröße zu steuern.

9. Steuerungsprogramm für eine Anzeigeeinrichtung (24) eines Klimaanlagensystems (1), welches, wenn es auf einem Computer betrieben wird, bewirkt, dass der Computer ausführt:
einen ersten Prozess zum Erfassen einer Bewegung einer Person in einem vorbestimmten Gebiet;
einen zweiten Prozess zum Berechnen einer Aktivitätsgröße der in dem ersten Prozess erfassten Person innerhalb einer vorbestimmten Zeitdauer;
einen dritten Prozess zum Lesen von Korrespondenzinformationen (45), die eine Korrespondenz zwischen einem Zeitschlitz und Identifikationsinformationen zum Unterscheiden zwischen Tag und Nacht darstellen; und
einen vierten Prozess zum Akquirieren der gegenwärtigen Zeit, um die Leuchtdichte der Anzeigeeinrichtung (24), die Licht basierend auf den Tages- und Nachtinformationen korrespondierend zu der aus den Korrespondenzinformationen gelesenen gegenwärtigen Zeit (45) und der Aktivitätsgröße emittiert, zu steuern.

## Revendications

1. Système de commande (10) d'un système de climatisation (1), le système de commande (10) comprenant :
un moyen d'affichage (24) à fournir dans une unité d'intérieur (2) du système de climatisation (1) pour émettre de la lumière ;
un capteur de détection d'humain (21) pour détecter un mouvement d'une personne dans une région prédéterminée ;
un moyen de calcul (41) adapté pour calculer une quantité d'activité de la personne détectée par le capteur de détection d'humain (21) pendant une durée prédéterminée ;
un moyen de stockage adapté pour stocker des informations de correspondance (45) représentant une correspondance entre une tranche horaire et des informations de jour et de nuit servant d'informations d'identification pour faire la distinction entre le jour et la nuit ; et
un moyen de commande (43) adapté pour acquérir des informations d'heure actuelle, pour commander la luminance du moyen d'affichage (24) sur la base des informations de jour et de nuit correspondant à l'heure actuelle, lues dans les informations de correspondance (45), et de la quantité d'activité.

2. Système de commande (10) selon la revendication 1, comprenant en outre
un moyen de détermination (42) adapté pour déterminer si la quantité d'activité est supérieure ou non à une valeur seuil de quantité d'activité,
dans lequel le moyen de commande (43) est adapté pour acquérir les informations d'heure actuelle, et régler la luminance du moyen d'affichage (24) à une valeur supérieure à une valeur seuil de luminance, lorsque c'est la nuit d'après les informations de jour et de nuit correspondant à l'heure actuelle lues dans les informations de correspondance (45) et que le moyen de détermination (42) détermine que la quantité d'activité est supérieure à la valeur seuil de quantité d'activité, et/ou
dans lequel le moyen de commande (43) est adapté pour acquérir les informations d'heure actuelle, et régler la luminance du moyen d'affichage (24) à une valeur non supérieure à la valeur seuil de luminance, lorsque c'est la nuit d'après les informations de jour et de nuit correspondant à l'heure actuelle lues dans les informations de correspondance (45) et que le moyen de détermination (42) détermine que la quantité d'activité n'est pas supérieure à la valeur seuil de quantité d'activité.

3. Système de commande (10) selon l'une quelconque des revendications 1 et 2, dans lequel la luminance du moyen d'affichage (24) est réglée selon la couleur d'une lumière émise.

4. Système de commande (10) selon l'une quelconque des revendications 1 à 3, comprenant en outre
un moyen de calendrier (50) dans lequel l'heure à laquelle le soleil se lève et l'heure à laquelle le soleil se couche sont réglées en correspondance avec la date,
la tranche horaire dans les informations de correspondance (45) étant rendue différente en fonction de la date, sur la base du moyen de calendrier (50).

5. Système de commande (10) selon l'une quelconque des revendications 1 à 4, dans lequel
les informations de correspondance (45) règlent le jour et la nuit dans une pluralité de phases,
le moyen de commande (43) règle progressivement la luminance du moyen d'affichage (24) d'après les informations de jour et de nuit concernant le jour et la nuit dans la pluralité de phases et la quantité d'activité.

6. Système de commande (10) selon l'une quelconque des revendications 1 à 5, comprenant en outre
un moyen de minuteur (44') à fournir dans l'unité d'intérieur (2), et
une télécommande (3), incluant un moyen d'horloge (32b) pour fournir en sortie des informations d'heure, pour faire fonctionner à distance l'unité d'intérieur (2),
dans lequel le moyen de minuteur (44') est adapté pour décompter une différence entre l'heure lorsque des tranches horaires de jour et de nuit sont commutées dans les informations de correspondance (45), et les informations d'heure acquises par la télécommande (3), et
le moyen de commande (43) est adapté pour changer la luminance du moyen d'affichage (23) lorsqu'il détecte que le moyen de minuteur (44') a atteint zéro.

7. Système de climatisation (1) comprenant :
le système de commande (10) selon l'une quelconque des revendications 1 à 6,
une unité d'intérieur (2) incluant le moyen d'affichage (24) capable d'émettre une lumière, et
une unité d'extérieur (6) associée à l'unité d'intérieur (2).

8. Procédé de commande d'un moyen d'affichage (24) d'un système de climatisation (1), le procédé de commande comprenant :
une première étape de détection de mouvement d'une personne dans une région prédéterminée ;
une deuxième étape de calcul d'une quantité d'activité de la personne détectée à la première étape, pendant une durée prédéterminée ;
une troisième étape de lecture d'informations de correspondance (45) représentant une correspondance entre une tranche horaire et des informations d'identification pour faire la distinction entre le jour et la nuit ; et
une quatrième étape d'acquisition de l'heure actuelle, pour commander la luminance du moyen d'affichage (24) qui émet une lumière sur la base des informations de jour et de nuit correspondant à l'heure actuelle lues dans les informations de correspondance (45) et de la quantité d'activité.

9. Programme de commande pour un moyen d'affichage (24) d'un système de climatisation (1) qui, lorsqu'il est exécuté sur un ordinateur, amène l'ordinateur à exécuter :
un premier processus de détection de mouvement d'une personne dans une région prédéterminée ;
un deuxième processus de calcul d'une quantité d'activité de la personne détectée dans le premier processus pendant une durée prédéterminée ;
un troisième processus de lecture d'informations de correspondance (45) représentant une correspondance entre une tranche horaire et des informations d'identification pour faire la distinction entre le jour et la nuit ; et
un quatrième processus d'acquisition de l'heure actuelle, pour commander la luminance du moyen d'affichage (24) qui émet une lumière sur la base des informations de jour et de nuit correspondant à l'heure actuelle lues dans les informations de correspondance (45), et de la quantité d'activité.
